# EUROPÄISCHE PATENTSCHRIFT

(11) **EP 1 295 698 B1**
(45) Veröffentlichungstag und Bekanntmachung des Hinweises auf die Patenterteilung: **02.11.2006**
(21) Anmeldenummer: 02021411.0
(22) Anmeldetag: 25.09.2002
(51) Int. Cl.: B29C 71/04

(54) **Verfahren zur Verbesserung von mechanischen, thermischen und chemischen Eigenschaften von Formkörpern aus thermoplastischen Elastomeren**
Process for improving the mechanical, thermal and chemical properties of moulded bodies made out of thermoplastic elastomer
Procédé pour l'amélioration des propriétés mécaniques, thermiques et chimiques d'objets moulés en élastomères thermoplastiques

(30) Priorität: 25.09.2001 DE 10147002
(43) Veröffentlichungstag der Anmeldung: 26.03.2003
(73) Patentinhaber: BARLOG plastics GmbH, 51766 Engelskirchen (DE)
(72) Erfinder: Barlog, Werner, 51766 Engelskirchen (DE)
(74) Vertreter: Müller-Gerbes, Margot

(56) Entgegenhaltungen:
- WO-A-01/37943
- DE-A- 1 779 420
- DE-A- 2 802 584
- DE-A- 10 027 399
- DE-A- 19 707 838

## Beschreibung

Die Erfindung bezieht sich auf ein Verfahren zum Verbessern von mechanischen, thermischen und chemischen Eigenschaften von aus thermoplastischen Elastomeren auf Basis von Polyester-Copolymeren vernetzungsmittelfrei hergestellten und unvernetzten Formkörpern.

Thermoplastische Elastomere - TPE - sind Polymere, die im Idealfall die Kombination der Gebrauchseigenschaften von elastomeren und den Verarbeitungseigenschaften von Thermoplasten besitzen. Dies kann dadurch erreicht werden, daß in dem TPE gleichzeitig weiche und elastische Segmente mit hoher Dehnbarkeit und niedriger Glasübergangstemperatur sowie harte, kristallisierbare Segmente mit geringer Dehnbarkeit, hoher Glasübergangstemperatur und Neigung zur Assoziatbildung vorliegen. Die Weich- und Hartsegmente müssen dabei miteinander unverträglich sein und als individuelle, sich nicht durchdringende Phasen vorliegen.

Thermoplastische Elastomere auf Basis von Polyester-Copolymeren, insbesondere copolymere Polyetherester werden aus beispielsweise Terephtalsäuredialkylestern mit nieder- und höhermolekularen Glykolen in wechselnden Mengenverhältnissen hergestellt, wobei als niedermolekulare Glykole Alkandiole, als höhermolekulare Glykole Polyalkylenoxyglykole eingesetzt werden. Hierbei entstehen höhermolekulare Polyalkylentherephtalate, die aus Segmenten mit Makromolekülen bestehen. Die sogenannten Hartsegmente sind die durch Umesterung der Teraphtalsäuredialkylester mit den niedermolekularen Glykolen entstandenen kristallinen Polyterephtalateinheiten, die sogenannten Weichsegmente sind die Polyalkylenoxyeinheiten. Beide Segmente ergeben alternierend Blockcopolymere. Für die Eigenschaften dieser Polyetherester-Copolymere sind beide Segmente bestimmend. Der Anteil der hochkristallinen starren Hartsegmente bewirkt die Härte. Der Anteil der flexiblen Weichsegmente bestimmt die Elastizität durch Variation der Art und der Anteile von Hart- und Weichsegmenten lassen sich Härte und Elastizität der thermo-plastischen Elastomere einstellen. Thermoplastische Elastomere auf Basis von Copolyestern haben bekanntermaßen gute anwendungstechnische Eigenschaften. Als Nachteil hat sich in der Praxis allerdings eine ungenügende Wärmeformbeständigkeit und eine unzureichende Belastbarkeit bei erhöhten Temperaturen herausgestellt, die in vielen Anwendungsfällen gefordert sind. Ebenso sind die Wechselbiegefestigkeit, die Rückstelleigenschaften und die Unlöslichkeit in bestimmten chemischen Medien ungenügend.

Es ist nun bekannt, die Eigenschaften von Thermoplasten durch Vernetzung zu verändern, sowohl durch chemische als auch physikalische Vernetzung. Auch die Vernetzung von Thermoplasten, insbesondere Polyolefinen mittels energiereicher ionisierender Strahlen, insbesondere γ-Strahlen ist seit langem bekannt, wozu nur beispielhaft auf die US 3,990,479, US 3,911,202, US 4,170,664, DE 35 15 708 A verwiesen wird. Hierbei werden üblicherweise für die Vernetzung von thermoplastischen Kunststoffen insbesondere auf Basis von Polyolefinen Strahlendosen in Höhe von 100 bis 200 kGy eingesetzt.

Andererseits lassen sich Polyalkylenterephthalate schwer und nur unter Zusatz von Vernetzungs(hilfs)mitteln mittels ionisierender Strahlen vernetzen.

Elastomere sind weitmaschig bis zur Zersetzungstemperatur vernetzte hochpolymere Werkstoffe, welche üblicherweise durch Zusatz von Vernetzungsmitteln, Vulkanisationsmitteln chemisch vernetzt werden.

Der Erfindung liegt die Aufgabe zugrunde, die mechanischen, thermischen und chemischen Eigenschaften von thermoplastischen Elastomeren auf Basis von Polyester-Copolymeren zu verbessern.

Überraschenderweise wurde festgestellt, daß diese Nachteile behoben werden können und damit eine wesentliche Verbesserung von mechanischen, thermischen und chemischen Eigenschaften erzielt werden kann, wenn gemäß dem Vorschlag der Erfindung die aus thermoplastischen Elastomeren auf Basis von Polyester-Copolymeren ohne Zugabe von Vernetzungsmitteln hergestellten und somit unvernetzten Formkörper einer Behandlung mit energiereichen ionisierenden Strahlen bestimmter Dosis ausgesetzt werden. Dabei tritt unerwartet eine Teilvernetzung des Polyester-Copolymeren ein, die partiell sowohl Hartsegmente als auch Weichsegmente erfaßt und die die gewünschten Eigenschaftsverbesserungen bedingt. Überraschend ist es gelungen, auch thermoplastische Elastomere, hier insbesondere die copolymeren Polyetherester vernetzungsmittelfrei, d. h. ohne Zusatz von Vulkanisationsmitteln oder sonstigen Vernetzungsmitteln nach der Herstellung von Formkörpern hieraus durch thermoplastische Verarbeitung, wie Spritzgießen, Extrudieren durch Behandeln mit energiereichen ionisierenden Strahlen zumindest teilweise und bereichsweise zu vernetzen. Hierbei wird die Behandlung mit einer Strahlendosis von bevorzugt mindestens 200 kGy durchgeführt. Bevorzugt werden Strahlendosen von mindestens 240 kGy, noch mehr bevorzugt von mehr als 300 kGy angewendet. Bevorzugt werden γ-Strahlen oder β-Strahlen eingesetzt. Mit dem erfindungsgemäßen Verfahren lassen sich Formkörper aus Polyester-Copolymeren mit einer Dicke bzw. Wanddicke von bis zu 5 mm bevorzugt im Bereiche von 0,5 bis 4 mm teilvernetzen.

Vorteilhafte Weiterbildungen des erfindungsgemäßen Verfahrens sind den kennzeichnenden Merkmalen der Unteransprüche entnehmbar.

Erfindungsgemäß wird das Verfahren zur Verbesserung der Eigenschaften eines unvernetzten Formkörpers auf Basis von Polyester-Copolymeren so durchgeführt, daß durch die Behandlung mit energiereichen ionisierenden Strahlen ein Vernetzungsgrad des Polyester-Copolymeren in dem Formkörper von mindestens 70 % erreicht wird.

Als Polyester-Copolymere werden bevorzugt copolymere Polyetherester eingesetzt.

Erfindungsgemäß werden zuerst unvernetzte und vernetzungsmittelfreie Formkörper aus den entsprechenden thermoplastischen Elastomeren insbesondere auf Basis von copolymeren Polyetherestern durch thermoplastische Verarbeitung hergestellt, beispielsweise im Spritzgußverfahren oder durch Extrusion, die anschließend durch Behandeln mit energiereichen ionisierenden Strahlen teilvernetzt werden.

Gemäß einem Vorschlag der Erfindung wird aus einem Polyester-Copolymer gegebenenfalls unter Zusatz von üblichen Additiven vernetzungsmittelfrei ein unvernetzter Formkörper durch Spritzgießen hergestellt und anschließend der Formkörper mit energiereichen ionisierenden Strahlen mit einer Strahlendosis von mindestens 200 kGy behandelt und teilvernetzt, wobei ein Vernetzungsgrad des Polyester-Copolymeren des Formkörpers von mindestens 70 % erreicht wird.

Gemäß einem weiteren Vorschlag der Erfindung wird aus einem Polyester-Copolymeren gegebenenfalls unter Zusatz von üblichen Additiven ohne Vernetzungsmittel ein unvernetzter Formkörper durch Extrudieren hergestellt und anschließend mit energiereichen ionisierenden Strahlen einer Strahlendosis von mindestens 200 kGy teilvernetzt, wobei ein Vernetzungsgrad des Polyester-Copolymeren im Formkörper von mindestens 70 % erreicht wird.

In einer bevorzugten Ausführung der Erfindung werden als thermoplastische Elastomere Blockcopolymere mit Weichsegmenten aus Polyalkylenetherdiolen und/oder langkettigen aliphatischen Dicarbonsäureestern mit teilkristallinen Polybutylenterephtalat-Segmenten eingesetzt. Ihr Anwendungsbereich liegt unvernetzt bei -40°C bis 100°C.

Überraschend wurde festgestellt, daß, obgleich Polybutylenterephtalate sich schlecht vernetzen lassen, und nur bei Zusatz von Vernetzungs(hilfs)mitteln eine Vernetzung erreichbar ist, die thermoplastischen Elastomere auf Basis der copolymeren Polyetherester sich überraschend auch ohne Zusatz von Vernetzungsmitteln nach der thermoplastischen Formgebung mit Hilfe von energiereichen ionisierenden Strahlen ausreichender Dosis teilvernetzen lassen, wobei Vernetzungsgrade von 70 % und höher auch bei Wandstärken/Dicken bis zu 5 mm erreichbar sind.

Erfindungsgemäß haben sich mit Vorteil Formkörper enthaltend Copolymere auf Basis Polyetherester durch Bestrahlen mit energiereichen Strahlen von Dosen bevorzugt über 200 kGy insbesondere über 300 kGy teilvernetzen lassen.

Durch die Teilvernetzung wird die Verbesserung der Wärmebelastbarkeit des Formkörpers, insbesondere eine kurzzeitige hohe Wärmebelastbarkeit des Formkörpers erzielt, des weiteren werden die Wärmeformbeständigkeit, Festigkeitseigenschaften, die Druckbelastbarkeit bei erhöhten Temperaturen, Wechselbiegefestigkeit, Abriebfestigkeit sowie die Rückstelleigenschaften verbessert. Darüber hinaus wurde auch eine Reduktion der Löslichkeit, d. h. eine verbesserte Chemikalienbeständigkeit erzielt. Der erfindungsgemäße Formkörper umfaßt nach dem Behandeln mit energiereichen ionisierenden Strahlen teilvernetzte sowie unvernetzt gebliebene Segmente. Bei Wärmebelastung geben die unvernetzten Bereiche des Formkörpers zwar bei erhöhten Temperaturen nach, im Gegensatz zu vollständig unvernetzten Formkörpern behalten die erfindungsgemäß teilvernetzten Formkörper ihre Form und das Material, auch das unvernetzte schmilzt auch bei kurzzeitiger Belastung bis zu 300°C und mehr nicht.

Die Erhöhung der kurzzeitigen Wärmebelastbarkeit eines Formkörpers ist u.a. für den Herstellungsprozeß und Verarbeitungsprozeß von Formkörpern, beispielsweise Lackierungsprozesse oder durchzuführende Lötarbeiten, welche bei Temperaturen von 250°C und höher durchgeführt werden, sehr wichtig.

Insbesondere gelingt mit der erfindungsgemäßen Behandlung von thermoplastischen Elastomeren auf Polyester-Copolymer-Basis die Verbesserung von mechanischen Eigenschaften des erfindungsgemäß teilvernetzten Formkörpers gegenüber dem unvernetzten Formkörper, insbesondere
- Anstieg der Module,
- Zunahme der Festigkeiten, insbesondere Langzeitfestigkeit bis zu 20 %,
- Verminderung des Kaltflusses (Kriechens),
- Verbesserung der Abriebfestigkeit,
- Verbesserung des Weiterreißwiderstandes,
- Verbesserung der Rückstelleigenschaften (Memory-Effekt),
sowie die Verbesserung von thermischen Eigenschaften, wie
- Erhöhung der Wärmebelastbarkeit,
- Erhöhung der Wärmeformbeständigkeit,
und des weiteren die Verbesserung von chemischen Eigenschaften, wie
- graduelle Verbesserung der Beständigkeit gegen Chemikalien,
- Reduktion der Löslichkeit,
- Abnahme des Quellverhaltens.

Erfindungsgemäß werden Formkörper auf Basis vernetzungsmittelfreien copolymeren Polyetheresters beansprucht, hergestellt durch Extrusion oder Spritzgießen, die sich dadurch auszeichnen, daß der Formkörper durch Behandeln mit energiereichen ionisierenden Strahlen einer Strahlendosis von mindestens 200 kGy teilvernetzt ist, wobei der copolymere Polyetherester im Formkörper einen Vernetzungsgrad von mindestens 70 % aufweist, bevorzugt einen Vernetzungsgrad von 80 % und mehr.

Erfindungsgemäße Formkörper mit verbesserten Eigenschaften können in Bereichen hoher Anforderungen an die Gebrauchstüchtigkeit sowohl im Innenbereich als auch Außenbereich eingesetzt werden, wie beispielsweise Bauteile für die Automobilausstattung, Karrosseriestopfen, Dämpfungselemente in Schließanlagen, Formkörper in Verbindung mit Metallteilen, wie Dichtungen an Platinen.

Insbesondere auch kleine hoch beanspruchte Bauteile aus Kunststoff können durch die erfindungsgemäßen Formkörper realisiert werden, insbesondere auch dann, wenn sie während der Herstellung oder im Gebrauch kurzzeitig sehr hohen Temperaturbelastungen, die weit über ihren Schmelzpunkt hinausgehen, ausgesetzt sind. Das sind beispielsweise auch kombinierte Bauteile, insbesondere mit Metallteilen, als Ummantelung, die beispielsweise bei der Weiterverarbeitung Schweißtemperaturen oder Löttemperaturen kurzzeitig ausgesetzt werden müssen. Solchen Belastungen sind die erfindungsgemäßen Formkörper überraschend gewachsen.

Der Vernetzungsgrad des Polyester-Copolymeren im mittels energiereicher Strahlen behandelten Formkörper läßt sich beispielsweise dadurch bestimmten, daß der teilvernetzte Formkörper mit Lösungsmitteln behandelt wird, so daß vernetzte Anteile als Gel zurückbleiben und aus der Menge des Gels Rückschlüsse auf den Vernetzungsgrad geschlossen werden, so daß sich aus dem Gelgehalt der Vernetzungsgrad ergibt. Die Bestimmung des Vernetzungsgrades kann auch nach DIN 16892 erfolgen. Der Formkörper kann des weiteren übliche Zusatzstoffe/Additive, wie Stabilisatoren, Füllstoffe, Gleitmittel, Farbmittel, Flammschutzmittel, UV-Absorber enthalten.

Die Erfindung wird nachfolgend an einem Beispiel erläutert.

Aus einem thermoplastischen Elastomeren auf Basis eines copolymeren Polyetheresters in Gestalt eines Blockcopolymeren mit teilkristallinen Polybutylenterephtalatsegmenten, mit einer Shore-Härte D von 38, einem spezifischen Gewicht nach ISO 1183 von 1,10 g/cm³, einem Zugmodul nach ISO 527 von 60 MPa, einer Streckspannung nach ISO 527 von 7 MPa, einer Streckdehnung nach ISO 527 von 70% und einer Charpy Kerbschlagzähigkeit nach ISO 179 bei 23°C und -30°C nicht gebrochen (NB) wurde ein Formkörper in Form einer Platte mit einer Dicke von 4 mm durch Spritzgießen hergestellt, wobei der Schmelzpunkt des unvernetzten und vernetzungsmittelfreien Formkörpers bei 195°C lag.

Der Formkörper enthielt Stabilisatoren in üblicher Menge, jedoch keine Füllstoffe, keine Vernetzungsmittel und war farblos.

Die Formkörper wurden anschließend unterschiedlichen Strahlendosen ausgesetzt und der Gelgehalt/Vernetzungsgrad bestimmt. Die Formkörper wurden mit β-Strahlen bestrahlt.

| Muster Nr. | Strahlendosis kGy | Gelanteil (Vernetzungsgrad) % |
|---|---|---|
| 1 | 160 | 73 |
| 2 | 240 | 80 |
| 3 | 280 | 81 |
| 4 | 340 | 82 |

Die Formkörper mit einem Vernetzungsgrad von 80 % und mehr zeigten eine wesentliche Steigerung der Wärmeformbeständigkeit, wobei die Formkörper erst bei Temperaturen von 350°C bereichsweise weich wurden, jedoch nicht geschmolzen sind. Des weiteren wurde eine Verbesserung der mechanischen Eigenschaften, nämlich der Module wie folgt erreicht, wobei die Spannung gem. ISO 527 gemessen beim unvernetzten Formkörper der Spannung eines vernetzten Formkörpers gem. Muster 4 gegenübergestellt wurde.

| Muster Nr. | Spannung bei 5 % Dehnung | Spannung bei 10 % Dehnung | Spannung bei 50 % Dehnung |
|---|---|---|---|
| 4 unvernetzt | 4 MPa | 5 MPa | 6 MPa |
| 4 vernetzt | 4,5 MPa | 5,8 MPa | 7,5 MPa |

Der Zugmodul des vernetzten Formkörpers war um 20 % höher.

Die erfindungsgemäßen strahlenvernetzten Polyesterelastomere sind von besonderem Interesse für solche Anwendungen, die mehr Reserven kurzfristig im Temperaturbereich verlangen, wobei sie hohen Temperaturen über 300°C und mehr ausgesetzt werden, in denen sie normalerweise weich werden oder gar schmelzen. Die erfindungsgemäß strahlenvernetzten Polyester-Copolymere füllen hier eine Lücke.

## Patentansprüche

1. Verfahren zum Verbessern von mechanischen, thermischen und chemischen Eigenschaften von aus thermoplastischen Elastomeren auf Basis von Polyester-Copolymeren vernetzungsmittelfrei hergestellten Formkörpern durch Behandeln und Teilvernetzen derselben mit energiereichen ionisierenden Strahlen.

2. Verfahren nach Anspruch 1, **dadurch gekennzeichnet, daß** die Behandlung mit einer Strahlendosis von mindestens 200 kGy durchgeführt wird.

3. Verfahren nach Anspruch 1, **dadurch gekennzeichnet, daß** die Behandlung mit einer Strahlendosis von mindestens 300 kGy durchgeführt wird.

4. Verfahren nach einem der Ansprüche 1 bis 3, **dadurch gekennzeichnet, daß** eine Behandlung mit β-Strahlen durchgeführt wird.

5. Verfahren nach einem der Ansprüche 1 bis 3, **dadurch gekennzeichnet, daß** eine Behandlung mit γ-Strahlen durchgeführt wird.

6. Verfahren nach einem der Ansprüche 1 bis 5, **dadurch gekennzeichnet, daß** Formkörper enthaltend als Polyester-Copolymere Polyetherester teilvernetzt werden.

7. Verfahren nach einem der Ansprüche 1 bis 6, **dadurch gekennzeichnet, daß** Formkörper enthaltend als Polyester-Copolymere Blockcopolymere von Weichsegmenten aus Polyalkylenetherdiolen und/oder langkettigen aliphatischen Dicarbonsäureestern mit Hartsegmenten aus teilkristallinem Polybutylenterephthalat teilvernetzt werden.

8. Verfahren nach einem der Ansprüche 1 bis 7, **dadurch gekennzeichnet, daß** der Formkörper aus Polyester-Copolymer bis zu einem Vernetzungsgrad von mindestens 70 % teilvernetzt wird.

9. Verfahren nach einem der Ansprüche 1 bis 8, **dadurch gekennzeichnet, daß** aus einem Polyester-Copolymer gegebenenfalls unter Zusatz von üblichen Additiven vernetzungsmittelfrei ein unvernetzter Formkörper durch Spritzgießen hergestellt wird und anschließend der Formkörper mit energiereichen ionisierenden Strahlen mit einer Strahlendosis von mindestens 200 kGy behandelt und teilvernetzt wird, wobei ein Vernetzungsgrad des Polyester-Copolymeren des Formkörpers von mindestens 70 % erreicht wird.

10. Verfahren nach einem der Ansprüche 1 bis 8, **dadurch gekennzeichnet, daß** aus einem Polyester-Copolymeren gegebenenfalls unter Zusatz von üblichen Additiven ohne Vernetzungsmittel ein unvernetzter Formkörper durch Extrudieren hergestellt wird und anschließend mit energiereichen ionisierenden Strahlen einer Strahlendosis von mindestens 200 kGy teilvernetzt wird, wobei ein Vernetzungsgrad des Polyester-Copolymeren im Formkörper von mindestens 70 % erreicht wird.

11. Verfahren nach einem der Ansprüche 1 bis 10, **dadurch gekennzeichnet, daß** Formkörper einer Dicke bzw. Wanddicke von bis zu 5 mm durch Behandeln mit energiereichen ionisierenden Strahlen teilvernetzt werden.

12. Formkörper auf Basis eines unvernetzten und vernetzungsmittelfreien copolymeren Polyetheresters hergestellt durch Extrusion oder Spritzgießen, **dadurch gekennzeichnet, daß** der Formkörper durch Behandeln mit energiereichen ionisierenden Strahlen einer Strahlendosis von mindestens 200 kGy teilvernetzt ist, wobei der copolymere Polyetherester im Formkörper einen Vernetzungsgrad von mindestens 70 % aufweist.

## Claims

1. A process for improving mechanical, thermal and chemical properties of mouldings produced without crosslinking agent from thermoplastic elastomers based on polyester copolymers, by treating and partially crosslinking the mouldings with high-energy ionizing rays.

2. A process according to claim 1, **characterized in that** the treatment is carried out with a radiation dose of at least 200 kGy.

3. A process according to claim 1, **characterized in that** the treatment is carried out with a radiation dose of at least 300 kGy.

4. A process according to any one of claims 1 to 3, **characterized in that** a treatment with β rays is carried out.

5. A process according to any one of claims 1 to 3, **characterized in that** a treatment with γ rays is carried out.

6. A process according to any one of claims 1 to 5, **characterized in that** mouldings containing, as polyester copolymers, polyether esters are partially crosslinked.

7. A process according to any one of claims 1 to 6, **characterized in that** mouldings containing, as polyester copolymers, block copolymers of soft segments composed of polyalkylene ether diols and/or long-chain aliphatic dicarboxylic esters with hard segments composed of partially crystalline polybutylene terephthalate are partially crosslinked.

8. A process according to any one of claims 1 to 7, **characterized in that** the moulding of polyester copolymer is partially crosslinked up to a degree of crosslinking of at least 70%.

9. A process according to any one of claims 1 to 8, **characterized in that** a non-crosslinked moulding is produced by injection moulding without crosslinking agent from a polyester copolymer, if desired with addition of typical additives, and subsequently the moulding is treated and partially crosslinked with high-energy ionizing rays with a radiation dose of at least 200 kGy, a degree of crosslinking of the polyester copolymer of the moulding of at least 70% being achieved.

10. A process according to any one of claims 1 to 8, **characterized in that** a non-crosslinked moulding is produced by extrusion without crosslinking agent from a polyester copolymer, if desired with addition of typical additives, and subsequently is partially crosslinked with high-energy ionizing rays with a radiation dose of at least 200 kGy, a degree of crosslinking of the polyester copolymer in the moulding of at least 70% being achieved.

11. A process according to any one of claims 1 to 10, **characterized in that** mouldings with a thickness, or wall thickness, of up to 5 mm are partially crosslinked by treatment with high-energy ionizing rays.

12. A moulding based on a non-crosslinked copolymeric polyether ester, without crosslinking agent, produced by extrusion or injection moulding, **characterized in that** the moulding is partially crosslinked by treatment with high-energy ionizing rays with a radiation dose of at least 200 kGy, the copolymeric polyether ester in the moulding having a degree of crosslinking of at least 70%.

## Revendications

1. Procédé d'amélioration des propriétés mécaniques, thermiques et chimiques de corps moulés fabriqués, sans agent de réticulation, à partir d'élastomères thermoplastiques à base de copolymères polyesters, par traitement et réticulation partielle de ces corps au moyen de rayons ionisants énergétiques.

2. Procédé conforme à la revendication 1, **caractérisé en ce que** le traitement est réalisé avec une dose de rayonnement d'au moins 200 kGy.

3. Procédé conforme à la revendication 1, **caractérisé en ce que** le traitement est réalisé avec une dose de rayonnement d'au moins 300 kGy.

4. Procédé conforme à l'une des revendications 1 à 3, **caractérisé en ce que** l'on effectue un traitement par rayons β.

5. Procédé conforme à l'une des revendications 1 à 3, **caractérisé en ce que** l'on effectue un traitement par rayons γ.

6. Procédé conforme à l'une des revendications 1 à 5, **caractérisé en ce que** l'on fait partiellement réticuler des corps moulés contenant, en tant que copolymères polyesters, des polyéther-esters.

7. Procédé conforme à l'une des revendications 1 à 6, **caractérisé en ce que** l'on fait partiellement réticuler des corps moulés contenant, en tant que copolymères polyesters, des copolymères séquencés comportant des segments souples à base de poly(oxyalkylène)diols et/ou d'esters d'acides dicarboxyliques aliphatiques à longues chaînes, et des segments rigides à base de poly(butylène téréphtalate) partiellement cristallin.

8. Procédé conforme à l'une des revendications 1 à 7, **caractérisé en ce que** l'on fait réticuler les corps moulés à base de copolymères polyesters partiellement, jusqu'à un degré de réticulation d'au moins 70 %.

9. Procédé conforme à l'une des revendications 1 à 8, **caractérisé en ce que** l'on prépare un corps moulé non réticulé à partir d'un copolymère polyester, par moulage par injection, sans agent de réticulation, mais en y ajoutant éventuellement des adjuvants habituels, et l'on fait ensuite partiellement réticuler le corps moulé en le traitant au moyen de rayons ionisants énergétiques, avec une dose de rayonnement d'au moins 200 kGy, grâce à quoi l'on atteint, au sein du corps moulé, un degré de réticulation du copolymère polyester d'au moins 70 %.

10. Procédé conforme à l'une des revendications 1 à 8, **caractérisé en ce que** l'on prépare un corps moulé non réticulé à partir d'un copolymère polyester, par extrusion, sans agent de réticulation, mais en y ajoutant éventuellement des adjuvants habituels, et l'on fait ensuite partiellement réticuler le corps moulé en le traitant au moyen de rayons ionisants énergétiques, avec une dose de rayonnement d'au moins 200 kGy, grâce à quoi l'on atteint, au sein du corps moulé, un degré de réticulation du copolymère polyester d'au moins 70 %.

11. Procédé conforme à l'une des revendications 1 à 10, **caractérisé en ce que** l'on fait partiellement réticuler, par traitement au moyen de rayons ionisants énergétiques, des corps moulés dont l'épaisseur ou l'épaisseur de paroi vaut jusqu'à 5 mm.

12. Corps moulé à base d'un copolymère polyéther-ester non réticulé et sans agent de réticulation, préparé par extrusion ou par moulage par injection, **caractérisé en ce que** ce corps moulé a été partiellement réticulé par traitement au moyen de rayons ionisants énergétiques, avec une dose de rayonnement d'au moins 200 kGy, grâce à quoi le copolymère polyéther-ester présent au sein du corps moulé présente un degré de réticulation d'au moins 70 %.
